# EUROPÄISCHE PATENTANMELDUNG

(11) **EP 0 814 345 A2**
(43) Veröffentlichungstag der Anmeldung: **29.12.1997**
(21) Anmeldenummer: 97105970.4
(22) Anmeldetag: 11.04.1997
(51) Int. Cl.: G01S 5/14

(54) **System zur Positionsbestimmung von mobilen Objekten, insbesondere von Fahrzeugen**

(30) Priorität: 21.06.1996 DE 19624719
(71) Anmelder: CLAAS KGaA, 33428 Harsewinkel (DE)
(72) Erfinder: Diekhans, Norbert, Dr., 33335 Gütersloh (DE)

(57) **Zusammenfassung**

Dei Erfindung betrifft ein System zur Positionsbestimmung von mobilen Objekten mit einem GPS-Navigationssystem. Dabei wird aus zwei oder mehreren Korrektursignalen von verschiedenen Referenzstationen über eine Auswerte- und Verarbeitungseinheit ein optimales Korrektursignal ermittelt und dieses zur Positionskorrektur für den mobilen GPS-Empfänger verwendet wird.

## Beschreibung

Die Erfindung bezieht sich auf ein System zur Positionsbestimmung von mobilen Objekten, insbesondere von Fahrzeugen.

Aus dem Stand der Technik ist es bekannt, hierfür das GPS-Satellitennavigationssystem (Global-Positioning-System) einzusetzen. An dem mobilen Objekt (Fahrzeug) ist für diesen Zweck eine Satelliten-Empfangseinheit (GPS-Empfänger) installiert, die von mehreren auf Erdumlaufbahnen umlaufenden, nicht geostationären GPS-Navigationssatelliten Satellitensignale zur Bestimmung seiner Positionskoordinaten empfängt (geographische Breite und Länge sowie die Höhe über Normalnull bzw. kartesische Koordinaten : x,y,z). Die Navigationssatelliten umrunden die Erde auf 6 Bahnen, wobei sich auf jeder Bahn 4 Satelliten befinden. Die handelsüblichen GPS-Empfänger sind in der Regel dafür ausgelegt, die Signale von 4 verschiedenen Navigationssatelliten empfangen zu können. Die Satelliten senden im wesentlichen ihren Identifizierungscode, eine hochgenaue, synchronisierte Uhrzeit und ihre jeweilige Position. Der GPS-Empfänger berechnet die Entfernung zu den jeweilgen GPS-Satelliten, indem er die Zeit mißt (Laufzeitmessung), die das Signal vom Satelliten zum Empfänger benötigt. Damit kann mit Hilfe geeigneter Auswerteverfahren eine dreidimensionale Positionsbestimmung durchgeführt werden. Mit einem solchen System läßt sich jedoch nur eine Genauigkeit von ca. ± 100 m erreichen. Die Ungenauigkeit hat verschiedene Ursachen. Ein Grund ist die künstliche Verschlechterung der GPS-Satellitensignale für zivile Nutzer im Unterschied zu autorisierten militärischen Nutzern. Ein weiterer Grund sind Bahnfehler der Navigationssatelliten sowie Ungenauigkeiten der Satellitenuhren. Beim Durchlaufen der Satellitensignale auf ihrem Weg zum GPS-Empfänger durch die Ionosphäre und die Tropospähre entstehen aufgrund der Wechselwirkung mit dem Ausbreitungsmedium weitere Ungenauigkeiten. Darüber hinaus beeinflußt die Kostellation der Satelliten im 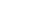 Sichtfeld 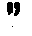 des GPS-Empfängers die Genauigkeit. Eine Genauigkeit ± 100 m reicht jedoch für viele Anwendungen nicht aus.

Aus diesem Grunde stützt sich beispielsweise ein Standard-Navigationssystem für Automobile neben dem GPS-Empfänger auch auf die während der Fahrt von verschiedenen am Fahrzeug angeordneten Sensoren (Radsensoren, Geschwindigkeitsmesser, Fahrtrichtungssensoren/Lenkwinkelsensoren) erzeugten Daten in Verbinung mit digitalisierten Straßenkarten. Auf diese Weise gelingt es, eine für eine Fahrtroutenführung ausreichende Genauigkeit für die Positionsbestimmung zu erzielen. Dieses System setzt jedoch voraus, daß die mobilen Objekte sich nur auf ausgewiesenen Straßen, die auf der digitalisierten Straßenkarte gespeichert sind bewegen. Die höhere Genauigkeit bedingt somit eine Eingrenzung auf die vom System erlaubte "Bewegungsfreiheit". Für Anwendungen zur Positionsbestimmung von Fahrzeugen beispielsweise in der Landwirtschaft ist dieses System nicht geeignet, da ein Feld die für das oben beschriebene System notwendigen charakteristischen Merkmale (seitlich begrenzte Sträßen mit definierter Breite, wahrscheinliche Haltepunkte wie Kreuzungen, Bahnübergänge, Kurven mit kleinem Kurvenradius) nicht aufweist.

Eine andere Alternative für die Erhöhung der Genauigkeit des GPS-Satellitennavigationssystems stellt das sogenannte differentielle GPS-System (DGPS) dar. Hierbei ermittelt ein ortsfester Referenz-GPS-Empfänger, dessen Positionskoordinaten genau bekannt sind, Korrekturdaten für die oben genannten Fehler (z.B. Bahnfehler, Uhrenfehler). Diese Korrekturdaten werden dann in Form eines Korrektursignals an den mobilen GPS-Empfänger beispielsweise per Funk übermittelt. Anhand dieses Korrektursignals errechnet der mobile GPS-Empfänger dann korrigierte Positionsdaten. Ein derartiges System ist beispielsweise in der DE 41 36 136 beschrieben. In dieser Schrift wird beschrieben, daß Rundfunksender zum Ausstrahlen der Korrektursignale verwendet werden. Voraussetzung für den wirksamen Einsatz eines solchen DGPS-Systems ist, daß der mobile GPS-Empfänger drei oder vier derjenigen Satelliten empfängt, die auch der Referenz-GPS-Empfänger empfängt und für die dieser Korrekturdaten zur Verfügung stellt. Darüber hinaus müssen die Fehler für den mobilen GPS-Empfänger und den Referenzempfänger gleich sein, was jedoch nur dann erfüllt wird, wenn der Referenz-GPS-Empfänger und der mobile GPS-Empfänger sehr dicht zusammen sind. Bei größeren Abständen zwischen Referenz-GPS-Empfänger und mobilem GPS-Empfänger stimmt diese Voraussetzung nicht mehr, da dann besonders die atmosphärisch bedingten Fehler (Einfluß der Ionosphäre, Troposphäre) unterschiedlich sind, da die Satelliten-Signale verschiedene Wege zurücklegen. Mit einem derartigen DGPS-System können Genauigkeiten von ca. ± 5m erzielt werden. Allerdings ist durch die notwendige Funkverbindung eine weitere Störungsquelle im Ortungssystem vorhanden. Laut eigener Messungen sind Ausfälle von bis zu 50 % der Betriebszeit möglich.

Aufgabe der Erfindung ist es, das System zur Positionsbestimmung von mobilen Objekten auf der Basis eines Satellitennavigationssystems in einfacher und kostengünstiger Weise hinsichtlich der Genauigkeit und Zuverlässigkeit zu verbessern und ein Verfahren zur Verbesserung der Positionsbestimmung vorzuschlagen.

Diese Aufgabe wird gelöst, indem von einem System Korrektursignale von von zwei oder mehreren ortsfesten Referenz-Satelliten-Empfängsstationen empfangen und einer elektronischen Auswerte- und Verarbeitungseinheit zugeführt werden. In der Auswerte- und Verarbeitungseinheit wird aus den Korrektursignalen der verschiedenen Referenz-Satelliten-Empfangsstationen anhand eines Auswertealgorithmusses ein verbessertes Fehlerkorrektursignal ermittelt. Das so ermittelte Fehlerkorrektursignal wird dann als Korrektursignal an die am beweglichen Objekt angeordnete Satelliten-Empfangseinheit zur Positionskorrektur übermittelt. Weitere beborzugte Ausgestaltungen ergeben sich aus den in den Unteransprüchen genannten Merkmalen.

Der Auswertealgorithmus beeinhaltet Qualitätskriterien, anhand derer die Güte der verschiedenen Korrektursignale laufend beurteilt wird. Dabei ist es in einer Ausgestaltung des erfindungsgemäßen Systems vorgesehen, die verschiedenen Korrektursignale miteinander zu vergleichen und das jeweils beste Korrektursignal an die am mobilen Objekt angeordnete Satelliten-Empfangseinheit zur Positionskorrektur zu übermitteln. In einer weiteren Ausgestaltung des erfindungsgemäßen Systems ist es vorgesehen, die verschiedenen Korrektursignale miteinander zu kombinieren. Dies kann beispielsweise durch Mittelwertbildung erfolgen. Darüber hinaus ist es auch vorgesehen, beispielsweise die Korrekturdaten für die Bahnfehler der Satelliten dem Korrektursignal 1 zu entnehmen und die Korrekturdaten für den Einfluß der Ionosphäre aus dem Korretursignal 2.

Mit dem erfindungsgemäßen System wird die Genauigkeit und Zuverlässigkeit der Positionsbestimmung mobiler Objekte gegenüber dem einfachen differentiellen GPS-System, welches nur ein Korrektursignal auswertet, deutlich verbessert. Die erzielbare Genauigkeit liegt im Bereich von ± 1 m. Damit erschließen sich Anwendungen wie beispielsweise die ortsdifferenzierte und - kontrollierte Steuerung von Bearbeitungsvorgängen in der Landwirtschaft (Ausbringen von Dünge-und Pflanzenschutzmitteln, Ertragskartierung o.dgl.). Neben der Genauigkeit wird auch die Zuverlässigkeit des Systems erhöht, da nicht mehr die Abhängigkeit von einer einzigen, eventuell nicht dauerhaft verfügbaren Referenz-Station gegeben ist.

Das erfindungsgemäße System ist nicht auf die Positionsbestimmung von Fahrzeugen beschränkt. So ist es beispielsweise auch für von Bedienpersonen zu Ortungszwecken mitgeführte, tragbare GPS-Empfänger anwendbar.

Anhand der beigefügten Zeichnungen wird das erfindungsgemäße System nachfolgend näher beschrieben. Es zeigt:
- Fig. 1: ein Blockschaltbild des Systems,
- Fig.2: ein Ablaufdiagramm zur Auswertung der Korrektursignale,
- Fig.3: eine schematische Darstellung der am System beteiligten Komponenten : Fahrzeug mit GPS-Empfänger, Navigationssatelliten, Referenz-GPS-Empfänger,
- Fig.4: eine schematische Darstellung der am System beteiligten Komponenten mit drei Referenz-GPS-Empfängern und einer Leitstation,
- Fig.5,6: schematische Veranschaulichungen zum Einfluß der Satellitennavigation auf die Genauigkeit.

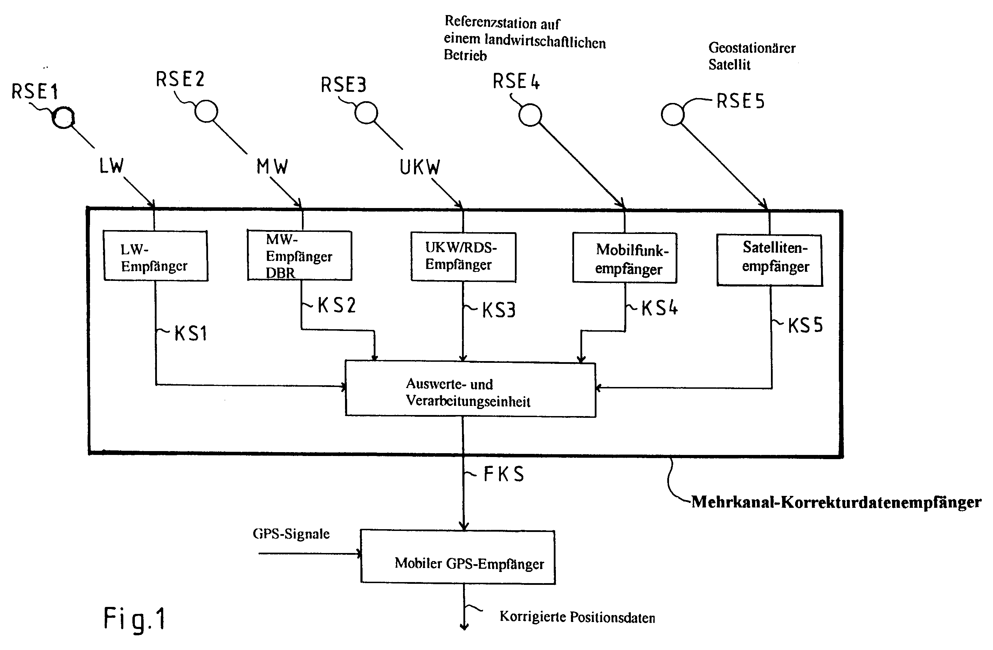

In Figur 1 ist ein Blockschaltbild des erfindungsgemäßen Systems mit einem Mehrkanal-Korrekturdatenempfänger mit einer elektronischen Auswerte- und Verarbeitungseinheit gezeigt, welcher aus den verschiedenen Korrektursignalen (KS1,...,KS5) ein optimales Fehlerkorrektursignal (FKS) ermittelt. Das so ermittelte Fehlerkorrektursignal (FKS) wird an die am mobilen Objekt (das meint auch den von einer Person mitgeführten GPS-Empfänger) angeordnete GPS-Satelliten-Empfangseinheit zur Positonskorrektur übermittelt.

In einer Ausgestaltung des Systems ist die Auswerte- und Verarbeitungseinheit in dem Mehrkanal-Korrekturdatenempfänger integriert. In einer alternativen Ausgestaltung ist die Auswerte- und Verarbeitungseinheit als separate Komponente (z.B. als PC oder Notebook) außerhalb des Mehrkanal-Korrekturdatenempfängers ausgebildet.

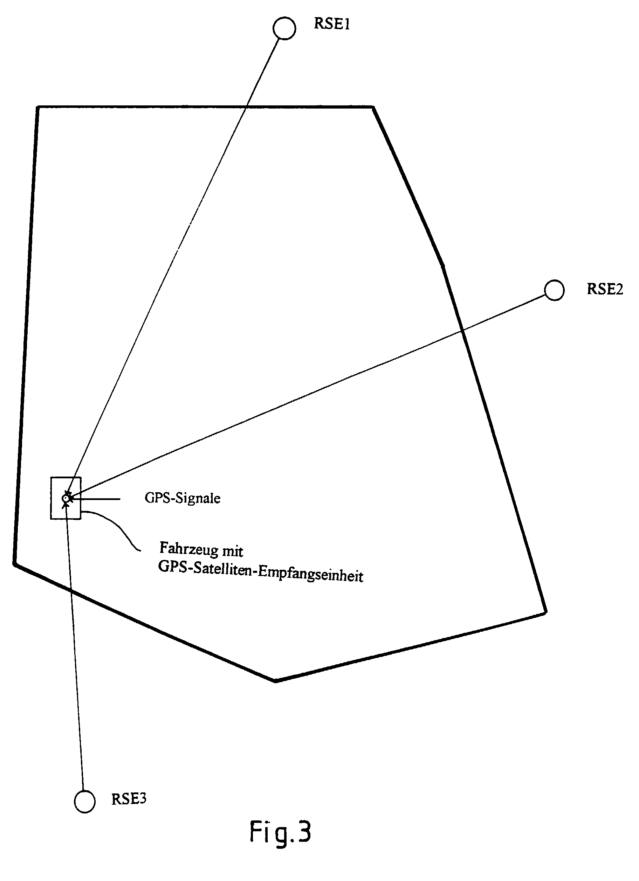

Die Auswerte- und Verarbeitungseinheit kann sich auf dem mobilen Objekt, auf dem auch die GPS-Satelliten-Empfangseinheit installiert ist, befinden (vgl. Fig.3). Die Datenübertragung (Übermittelung des Fehlerkorrektursignals) von der Auswerte- und Verarbeitungseinheit an die GPS-Satelliten-Empfangseinheit erfolgt dabei über Kabel (z.B. über die serielle Schnittstelle). Ferner ist es vorgesehen, die Auswerte- und Verarbeitungseinheit in der mobilen GPS-Empfangseinheit zu integrieren.

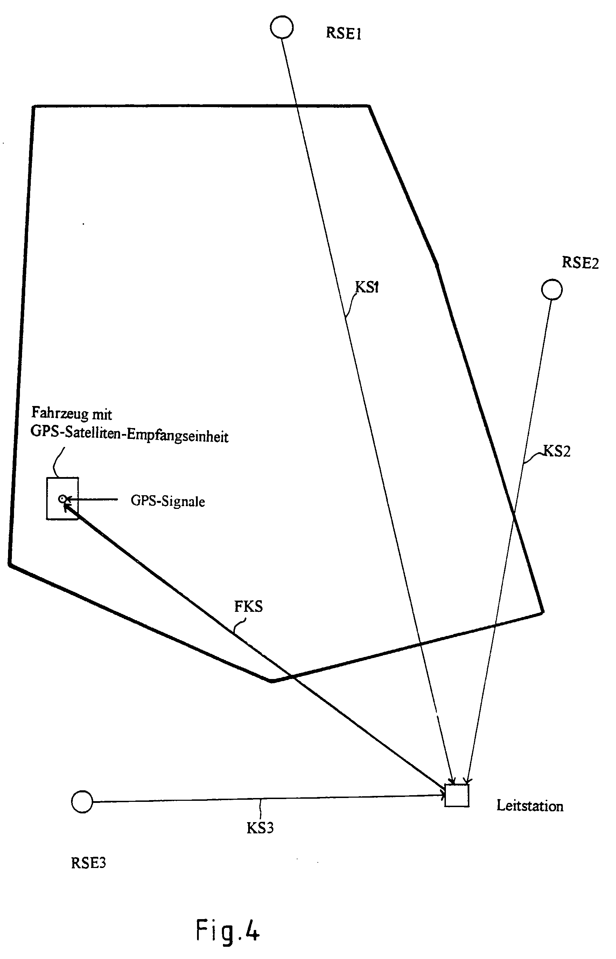

In einer anderen Ausgestaltung des Systems ist die Auswerte- und Verarbeitungseinheit Bestandteil einer Korrekturdaten-Leitstation (vgl. Fig.4). Die Leitstation empfängt von verschiedenen Referenz-Satelliten-Empfangsstationen (RES1,...) Korrektursignale (KS1,...). Das verbesserte/ausgewählte Fehlerkorrektursignal (FKS) wird dann per Funk an den mobilen GPS-Empfänger gesendet. Dabei wird das verbesserte Fehlerkorrektursignal (FKS) vorzugsweise in dem Standardformat gesendet, in dem auch die Korrektursignale (KS1,...) von den Referenz-Satelliten-Empfangsstationen (RES1,...) gesendet werden. Der Standard ist das RTCM-Format (Radio Technical Commission for Maritime Services). Damit kann das System von konventionellen DGPS-Empfängern genutzt werden, die ja für den Empfang eines Korrektursignals im RTCM-Format ausgelegt sind.

In Fig. 1 sind beispielhaft 5 verschiedene Referenz-Satelliten-Empfangsstationen (RES1,...) dargestellt, die ihre Korrektursignale (KS1...) per Funk in jeweils verschiedenen Frequenzbereichen übertragen.

Die erste Referenz-Station sendet ihre Kontrollsignale (KS1) über das Medium Langwelle. Langwellen (30-300kHz) breiten sich als Bodenwelle bis zu mehreren tausend Kilometern aus. Die Ausbreitungsbedingungen sind fast unabhängig von der Sonnenaktivität und der Jahreszeit. Es besteht lediglich ein schwacher Einfluß der Tageszeit, wobei nachts die Signale etwas stärker sind als am Tage. Bodenwelle und Raumwelle wirken ganztägig. Steil in die Ionosphäre eindringende Raumwellen werden dort reflektiert, dabei auch gleichzeitig stark gedämpft. Große Sendeleistungen gewährleisten vom Zustand der Ionosphäre weitgehend unabhängige stabile Reichweiten. Das Medium Langwelle hat den Vorteil im Vgl. zu UKW, daß Signalabschattungen und Mehrwegeempfang nur selten auftreten. So würde zum Beispiel zur Abdeckung innerhalb Deutschlands eine LW-Referenzstation ausreichen, wodurch u.U. große Entfernungen zwischen dem mobilen GPS-Nutzer und der Referenzstation vorliegen, was u.U. einen relativ großen Unterschied der GPS-Satellitensignal-Fehler zwischen dem mobilen GPS-Empfänger und der Referenzstation bedeutet.

Die zweite Referenz-Station sendet ihre Kontrollsignale (KS2) über das Medium Mittelwelle. Für die Schiffahrt werden bereits DGPS-Korrektursignale im Seefunkfeuerfrequenzband von 283,5 bis 325 kHz ausgestrahlt. Für den Empfang dieser Signale kann ein sogenannter "Differential Beacon Receiver" (DBR) eingesetzt werden. Mittelwellen sind tagsüber praktisch nur als Bodenwellen wirksam. Diese ist stärker gedämpft als bei LW. Aufgrund des besseren Antennenwirkungsgrades kann aber u.U. mit geringerer Leistung gesendet werden. Infolge eines sogenannten "Dämmerungseffekts" insbesondere zur Zeit des Sonnenauf- und untergangs und im Verlauf der Nacht muß mit Interferenzerscheinungen zwischen Raum- und Bodenwelle gerechnet werden, was zu Trägerschwunderscheinungen (Fading) führt, so daß zeitweilig der Empfang der Korrektursignale (KS2) unmöglich ist.

Die dritte Referenz-Station sendet ihre Kontrollsignale (KS3) über das Medium Ultrakurzwelle.

Die Ausbreitung von UKW (30 bis 300 Mhz) erfolgt bei optisch guter Sicht praktisch verlustlos. Die Ausbreitungsbedingungen werden durch Reflexion (Mehrwegeempfang) und Abschattungen bestimmt, die zu Schwunderscheinungen führen. Es sind hohe Datenraten möglich.

Bei der vierten Referenz-Station handelt es sich um eine Basisstation, die zum Beispiel auf einem landwirtschaftlichen Betrieb aufgestellt ist und ihre Korrektursignale über eine Mobilfunkfrequenz aussendet. Vorzugsweise ist diese Basisstation gleichzeitig eine Korrekturdaten-Leitstation, die mehrere Korektursignale empfängt, wobei das mit der Auswerte-und Verarbeitungseinheit ermittelte, verbesserte Fehlerkorrektursignal (FKS) für Anwendungen in der Landwirtschaft zur Verfügung gestellt wird.

Bei der fünften Referenz-Satelliten-Station handelt es sich um eine Bodenstation, die die GPS-Satellitensignale empfängt und ihrerseits Satellitenkorrektursignale (KS5) über einen geostationären Kommunikationssatelliten aussendet. Wenigstens eine der Referenz-Satelliten-Stationen kann ihre Signale auch über den Digital Audio Broadcast (DAB) ausstrahlen. Die Ausstrahlung kann in dem amerikanischen genormten Datenformat RTCM-SC104 erfolgen.

Die mobile Satellitenempfangsstation und wenigstens eine der Referenz-Satelliten-Empfangsstationen kann zudem die L1- und/oder die L2-Frequenz der Navstar-Satelliten empfangen und kann zusätzlich je eine Auswertung der Phasenverschiebung für die L1-und/oder die L2-Frequenz vornehmen (sogenanntes P-DGPS).

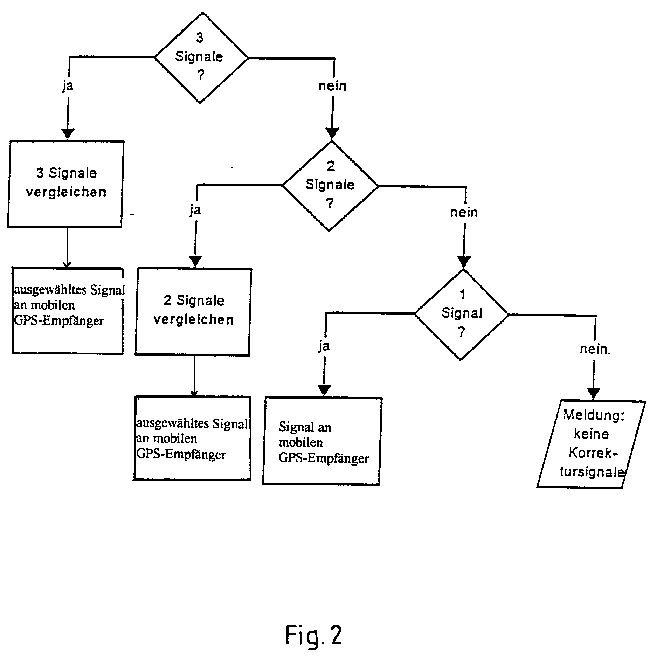

In Figur 2 ist ein Ablaufdiagramm zur Auswertung eines Systems mit beispielsweise 3 Korrektursignalen (KS1,...KS3) gezeigt. Zunächst erfolgt eine Abfrage über die Zahl der Signale die empfangbar sind. Dann werden die Signale anhand von Qualitätskriterien miteinander verglichen und das jeweils beste Signal an die mobile Satelliten-Empfangseinheit zur Positionskorrektur übermittelt. Neben der Auswahl eines Korrektursignals ist auch eine Mittelung der verschiedenen Korrektursignale oder eine selektive Auswahl von Korrekturdaten aus den verschieden Korrektursignalen vorgesehen. So können z.B. die Vorteile von LW-, MW- und UKW-Referenzstationen tageszeit-, wetter- und entfernungsabhängig miteinander in günstiger Weise kombiniert werden. Es ist vorgesehen, daß die Qualitätskriterien zur Beurteilung der Güte der Korrektursignale folgendes berücksichtigen:
- die Zahl der Navigationssatelliten, von denen eine Referenzstation GPS-Signale empfängt,
- das Alter der Korrektursignale,
- die Feldstärke bzw. Intensität der empfangenen Korrektursignale,
- die lokale, statistische Verfügbarkeit der Korrektursignale,
- die Enfernung zwischen dem mobilen GPS-Empfänger und der Referenzstation,
- die geometrische Satellitenkonstellation der Navigationssatelliten, von denen eine Referenzstation GPS-Signale empfangen hat.

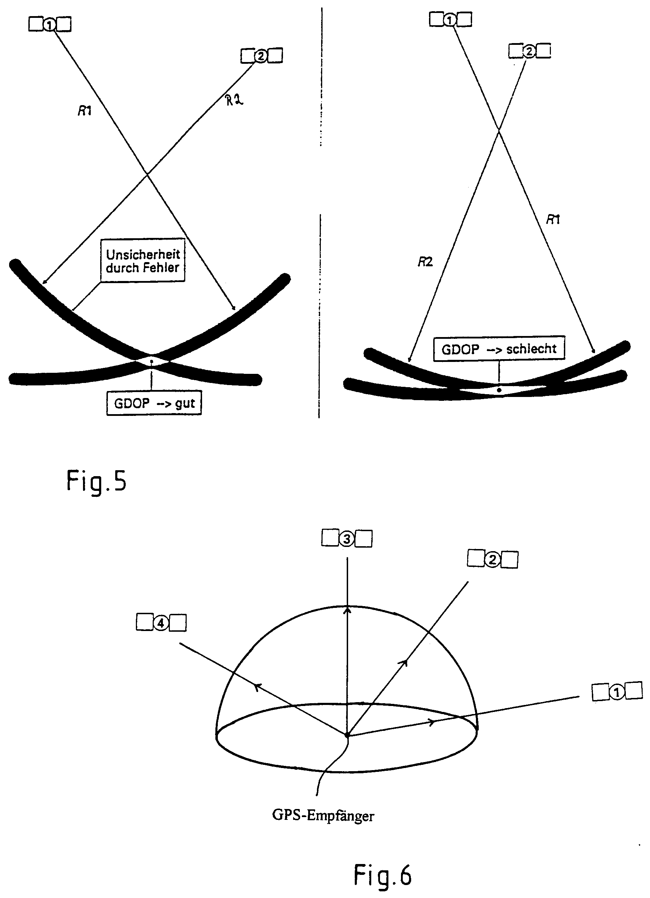

Der Einfluß der Satellitenkonstellation auf die Genauigkeit der Positionsbestimmung und damit auf die Güte des Korrektursignals soll anhand der Fig.5 und 6 kurz erläutert werden. Der geometrische Einfluß auf die Verringerung der Genauigkeit (DOP: Dilution of Precision) kann anschaulich anhand des Problems erläutert werden, den Schnittpunkt zweier sich schneidenener Linien mit einer bestimmten Strichdicke zu bestimmen (vgl.Fig.5). Die Strichdicke entspricht dabei der Ungenauigkeit (ΔR) in der Entfernungsbestimmung zu einem GPS-Satelliten. Je breiter der Strich, d.h. je größer die Ungenauigkeit in der Enfernungsbestimmung zu einem GPS-Satelliten, und je flacher der Schnittwinkel der sich schneidenden Linien ist, desto größer ist die Positionsungenauigkeit. Der GDOP-Wert (Geometric-DOP) für die Satellitenkonstellation in der linken Hälfte ist daher günstiger als für die Konstellation in der rechten Hälfte.

Für den Positionsfehler in der navigatorischen Praxis ist der dreidimensionale PDOP (Position-DOP) wichtig. Dieser Faktor kann geometrisch als das Volumen eines Tetraeders verstanden werden, der durch die Richtungen zu den vier Satelliten aufgespannt wird. Sein Volumen verhält sich umgekehrt proportional zum PDOP-Wert. Der beste Wert wird erreicht, wenn drei Satelliten in gleichmäßigen Winkelabständen von 120° knapp über dem Horizont stehen und sich der vierte senkrecht über dem GPS-Empfänger befindet.

Anstelle oder zusätzlich zum Navstar-GPS, das bekannterweise von unterschiedlich starken codierten Fehlerraten betroffen ist, können wahlweise die Referenz- und Mobilstationen auch auf Basis des russischen GLONASS betrieben werden, dessen Signale zur Zeit nicht durch Fehlerraten verfälscht werden.

## Patentansprüche

1. System zur Positionsbestimmung von mobilen Objekten, insbesondere von Fahrzeugen, mit einer an dem mobilen Objekt angeordneten Satelliten-Empfangseinheit (GPS-Empfänger), die von mehreren auf Erdumlaufbahnen umlaufenden Navigationssatelliten, die ihre Position gegenüber einem stationären Erdpunkt fortlaufend verändern, Satellitensignale zur Bestimmung ihrer Positionskoordinaten(x,y,z) empfängt, wobei die Satelliten-Empfangseinheit des mobilen Objekts in der Lage ist, ein Korrektursignal mit Korrekturdaten von einer ortsfesten Referenz-Satelliten-Empfangsstation mit genau bekannten Positionskoordinaten zu empfangen und für eine Berechunung von korrigierten Positionsdaten auszuwerten,
**dadurch gekennzeichnet,**
daß Korrektursignale (KS1,KS2,...) von zwei oder mehreren ortsfesten Referenz-Satelliten-Empfangsstationen (RES1,RES2,...) empfangen werden und einer elektronischen Auswerte-und Verarbeitungseinheit zugeführt werden, in der Auswerte- und Verarbeitungseinheit aus den Korrektursignalen (KS1,KS2,...) der verschiedenen ortsfesten Referenz-Satelliten-Empfangsstationen (RES1,RES2,...) anhand von einem Auswertealgorithmus ein optimales Fehlerkortektursignal (FKS) ermittelt wird, und das so ermittelte Fehlerkorrektursignal (FKS) als Korrektursignal an die am beweglichen Objekt angeordnete Satelliten-Empfangseinheit zur Positionskorrektur übermittelt wird.

2. System nach Anspruch 1,
**dadurch gekennzeichnet,**
daß die von verschiedenen Referenz-Satelliten-Empfangstationen (RES1,RES2,...) stammenden Korrektursignale (KS1,KS2,...) nach definierten Qualitätskriterien hinsichtlich ihrer Güte beurteilt und miteinander verglichen werden, wobei das jeweils beste Korrektursignal (KS1,KS2,...) an die am mobilen Objekt angeordnete Satelliten-Empfangseinheit zur Positionskorrektur übermittelt wird.

3. System nach Anspruch 1 und 2,
**dadurch gekennzeichnet,**
daß die Qualitätskriterien zur Beurteilung der Güte der Korrektursignale (KS1,KS2,...) die Zahl der Navigationssatelliten berücksichtigen, von denen eine Referenz-Satelliten-Empfangsstation (RES1,RES2,...) Satellitensignale empfangen hat.

4. System nach einem oder mehreren der Ansprüche 1 bis 3,
**dadurch gekennzeichnet,**
daß die Qualitätskriterien zur Beurteilung der Güte der Korrektursignale (KS1,KS2,...) die geometrische Satellitenkonstellation beispielsweise den PDOP-Wert (Position-Dilution of Precision) der Navigationssatelliten berücksichtigen, von denen eine Referenz-Satelliten-Empfangsstation (RES1,RES2,...) Satellitensignale empfangen hat.

5. System nach einem oder mehreren der Anspüche 1 bis 4,
**dadurch gekennzeichnet,**
daß die Qualitätskriterien zur Beurteilung der Güte der Korrektursignale (KS1,KS2,...) die Feldstärke bzw. die Intensität des von einer Referenz-Satelliten-Empfangsstation (RES1,RES2,...) per Funk empfangenen Korrektursignals (KS1,KS2,...) berücksichtigen.

6. System nach einem oder mehreren der Ansprüche 1 bis 5,
**dadurch gekennzeichnet,**
daß die Qualitätskriterien zur Beurteilung der Güte der Korrektursignale (KS1,KS2,...) das Alter der Korrektursignale () berücksichtigen.

7. System nach einem oder mehreren der Ansprüche 1 bis 6,
**dadurch gekennzeichnet,**
daß die Qualitätskriterien zur Beurteilung der Güte der Korrektursignale (KS1,KS2,...) die lokale statistische Verfügbarkeit der per Funk von einer Referenz-Satelliten-Empfangsstation übertragenen Korrektursignale (KS1,KS2,...) berücksichtigt.

8. System nach einem oder mehreren der Ansprüche 1 bis 7,
**dadurch gekennzeichnet,**
daß die Qualitätskriterien zur Beurteilung der Güte der Korrektursignale (KS1,KS2,...) den räumlichen Abstand zwischen einer jeweiligen Referenz-Satelliten-Empfangsstation (RES1,RES2,...) und der mobilen Satelliten-Empfangseinheit berücksichtigen.

9. System nach einem oder mehreren der Ansprüche 1 bis 8,
**dadurch gekennzeichnet,**
daß die Qualitätskriterien zur Beurteilung der Güte der Korrektursignale (KS1,KS2,...) die Auswahl einzelner Korrekturdaten (Z.B. für den Bahnfehler der Navigationssatelliten, für Fehler durch den Einfluß der Ionosphäre und der Troposphäre) aus den verschiedenen Korrektursignalen (KS1,KS2,...) berücksichtigen, wobei die ausgewählten Korrekturdaten zu einem neuen Korrekturdatensatz zusammengefaßt und als Fehlerkorrektursignal (FKS) an die Satelliten-Empfangseinheit des mobilen Objekts übermittelt werden.

10. System nach einem oder mehreren der Ansprüche 1 bis 9,
**dadurch gekennzeichnet,**
daß die Korrektursignale (KS1,KS2,...) gemittelt werden.

11. System nach einem oder mehreren der Ansprüche 1 bis 10,
**dadurch gekennzeichnet,**
daß die Auswerte-und Verarbeitungseinheit für die Korrektursignale (KS1,KS2,...)der verschiedenen ortsfesten Referenz-Satelliten-Empfangsstationen (RES1,RES2,...) auf dem mobilen Objekt angeordnet ist, auf dem auch die Satelliten-Empfangseinheit angeordnet ist.

12. System nach Anspruch 11,
**dadurch gekennzeichnet,**
daß die Auswerte-und Verarbeitungseinheit für die Korrektursignale (KS1,KS2,...) der verschiedenen ortsfesten Referenz-Satellitenempfangsstationen (RES1,RES2,...) in der Satelliten-Empfangseinheit (GPS-Empfänger) des mobilen Objekts integriert ist.

13. System nach einem oder mehreren der Ansprüche 1 bis 10,
**dadurch gekennzeichnet,**
daß die Auswerte-und Verarbeitungseinheit für die Korrektursignale (KS1,KS2,...) der verschiednenen ortsfesten Referenz-Satelliten-Empfangsstationen (RES1,RES2,...) Bestandteil einer Korrekturdaten-Leitstation ist, die das verbesserte Korrektursignal (FKS) per Funk an die Satelliten-Empfangseinheit des mobilen Objekts sendet.

14. System nach einem oder mehreren der vorstehenden Ansprüche,
**dadurch gekennzeichnet,**
daß wenigstens eine der Referenz-Satelliten-Empfangssationen (RES1,RES2,...) ihre Korrektursignale (KS1,KS2,...) über eine LW-Sendefrequenz aussendet.

15. System nach einem oder mehreren der vorstehenden Ansprüche,
**dadurch gekennzeichnet,**
daß wenigstens eine der Referenz-Satelliten-Empfangssationen ihre Korrektursignale über eine MW-Sendefrequenz aussendet.

16. System nach einem oder mehreren der vorstehenden Ansprüche,
**dadurch gekennzeichnet,**
daß wenigstens eine der Referenz-Satelliten-Empfangsstationen ihre Korrektursignale über eine UKW-Sendefrequenz aussendet.

17. System nach einem oder mehreren der vorstehenden Ansprüche,
**dadurch gekennzeichnet,**
daß wenigstens eine der Referenz-Satelliten-Empfangssationen ihre Korrektursignale über einen Rundfunksender ausstrahlt, wobei das Korrektursignal in ein Rundfunk Daten-Signal (RDS) eingefügt ist.

18. System nach einem oder mehreren der vorstehenden Ansprüche,
**dadurch gekennzeichnet,**
daß wenigstens eine der Referenz-Satelliten-Empfangssationen ihre Korrektursignale über Mobilfunk-Sendestationen ausstrahlt.

19. System nach einem oder mehreren der vorstehenden Ansprüche,
**dadurch gekennzeichnet,**
daß wenigstens eine der Referenz-Satelliten-Empfangssationen ihre Korrektursignale über einen geostationären Satelliten ausstrahlt.

20. System nach einem oder mehreren der vorstehenden Ansprüche,
**dadurch gekennzeichnet,**
daß wenigstens eine der Referenzstationen ihre Korrektursignale über den Digital Audio Broadcast (DAB) ausstrahlt.

21. System nach einem oder mehreren der vorstehenden Ansprüche,
**dadurch gekennzeichnet,**
daß wenigstens eine der Referenzstationen ihre Korrektursignale in dem genormten Datenformat RTCM-SC104 ausstrahlt.

22. System nach einem oder mehreren der vorstehenden Ansprüche,
**dadurch gekennzeichnet,**
daß die mobile Satellitenempfangsstation und wenigstens eine der Referenz-Satelliten-Empfangsstationen die L1- und/oder die L2-Frequenz der Navstar-Satelliten empfängt.

23. System nach Anspruch 22,
**dadurch gekennzeichnet,**
daß die mobile Satellitenempfangsstation und wenigstens eine der Referenz-Satelliten-Empfangsstationen zusätzlich je eine Auswertung der Phasenverschiebung für die L1- und/oder die L2-Frequenz vornehmen (sogenanntes P-DGPS).

24. System nach einem oder mehreren der vorstehenden Ansprüche,
**dadurch gekennzeichnet,**
daß der oder die mobilen und/oder ortsfesten Referenz-Satelliten-Empfangsstationen auf Basis des russischen GLONASS betrieben werden.
